# EUROPÄISCHE PATENTSCHRIFT

(11) **EP 1 520 740 B1**
(45) Veröffentlichungstag und Bekanntmachung des Hinweises auf die Patenterteilung: **01.12.2010**
(21) Anmeldenummer: 04022412.3
(22) Anmeldetag: 21.09.2004
(51) Int. Cl.: B60J 1/20

(54) **Rollo mit zweiteiligem Auszugsprofil**
Roller blind with two-part pull-out element
Store enrouleur avec tiroir composé de deux parties

(30) Priorität: 02.10.2003 DE 10346190
(43) Veröffentlichungstag der Anmeldung: 06.04.2005
(73) Patentinhaber: BOS GmbH & Co. KG, 73760 Ostfildern (DE)
(72) Erfinder: Hansen, Melf, 75053 Gondelsheim (DE); Walter, Herbert, 73061 Ebersbach (DE); Kalász, Gábor, 9200 Mosonmagyaróvár (HU)
(74) Vertreter: Rüger, Barthelt & Abel Patentanwälte

(56) Entgegenhaltungen:
- EP-A- 1 149 718
- DE-A1- 10 028 883
- DE-A1- 10 064 513

## Beschreibung

Aus der EP 1 149 718 A2 ist ein Seitenfensterrollo für die hintere Seitentür eines Kraftfahrzeugs bekannt.

Das Rollo weist eine innerhalb der Tür drehbar gelagerte Wickelwelle auf, an der mit einer Kante eine biegeschlaffe Rollobahn befestigt ist. Die vor dem Fenster vorbeilaufende Kante der Rollobahn ist mit einem Auszugsprofil verbunden, um diese Kante der Rollobahn zu stabilisieren. Außerdem greifen an dem Auszugsprofil zwei biegeelastische Schubstangen an, die über einen Elektromotor aus der Tür in Richtung auf die Fensteroberkante vorgeschoben werden und dabei die Rollobahn vor dem Fenster aufspannen. Zum Aufwickeln der Rollobahn auf die Wickelwelle ist ein Federmotor vorgesehen, der die Wickelwelle im Sinne des Aufwickelns der Rollobahn elastisch vorspannt.

Wie die Figur dieser Druckschrift zeigt, ist die vor dem Fenster vorbeilaufende Kante des Rollos entsprechend der Oberkante des Fensters sehr stark gekrümmt. Es ist deswegen nicht einfach das Auszugsprofil mit der Rollobahn zu verbinden.

Ausgehend hiervon, ist es Aufgabe der Erfindung ein Fensterrollo für Kraftfahrzeuge zu schaffen, bei dem die Verbindung zwischen der Rollobahn und dem Auszugsprofil vereinfacht ist.

Diese Aufgabe wird erfindungsgemäß mit dem Fensterrollo mit den Merkmalen des Anspruches 1 gelöst.

Ein gattungsgemäßes Rollo ist der DE 10 064 513 zu entnehmen.

Bei dem neuen Fensterrollo für Kraftfahrzeuge ist die eine Kante der Rollobahn mit einem Auszugsprofil verbunden. Das Auszugsprofil enthält eine Nut, in der die Rollobahn zu verankern ist. Die Nut ist in ihrem Querschnitt an eine Verdickung angepasst, die an der betreffenden Kante der Rollobahn vorgesehen ist. Die Nut setzt sich gedanklich aus einem Nutenschlitz und einer daran anschließenden Nutenkammer zusammen, wobei die lichte Weite der Nutenkammer deutlich größer ist als der Nutenschlitz, so dass sich insgesamt eine hinterschnittene Nut ergibt. Der Querschnitt der Nutenkammer ist vorzugsweise an den Querschnitt der Verdickung angepasst, bspw. kreisrund.

Das Auszugsprofil ist zumindest in der Umgebung der Nut bezogen auf den Querschnitt zweigeteilt. Hierdurch ist an jedem Auszugsprofilteil eine Schlitzwand ausgebildet . Außerdem trägt jedes Auszugsprofilteil einen Teil der Wand der Nutenkammer. Dadurch wird erreicht, dass jedes Auszugsprofilteil für sich gesehen, zumindest was die Nut zur Verankerung der Rollobahn anbelangt, frei von Hinterschneidungen ist.

Damit werden zwei wesentliche Vorteile erzielt. Zunächst einmal ist das Spritzwerkzeug zum Herstellen der beiden Auszugsprofilteile verhältnismäßig einfach, weil das Werkzeug keinen ziehbaren Kern benötigt, um eine lange hinterschnittene Nut im Spritzvorgang zu erzeugen. Darüberhinaus wäre es ohnehin äußerst schwierig den Kern aus dem Werkstück zu entfernen, wenn der Verlauf der Nut über die Länge des Auszugsprofils gesehen einen wechselnden Krümmungsradius aufweist.

Indem das Auszugsprofilteil im Bereich der Verankerungsnut frei von Hinterschneidungen ist, kann hierfür ein einfaches, starres Spritzgusswerkzeug verwendet werden.

Der weitere Vorteil besteht in der fertigungstechnischen Art vereinfachten Montage der Rollobahn an dem Auszugsprofil. Es genügt, wenn die Rollobahn mit in der Verdickung in den einen Teil der Nut einer der beiden Auszugsprofilteile eingelegt wird. Durch Fügen der beiden Auszugsprofilteile entsteht die hinterschnittene Nut, die ein Freikommen der Verdickung aus der Nut verhindert.

Die zweiteilige Anordnung erübrigt ein Einschieben der Rollobahn mit der Verdickung in Längsrichtung des Auszugsprofils. Diese Art der Montage ist kompliziert und zeitaufwändig.

Insbesondere ist bei dem neuen Auszugsprofil auch eine einfache Verbindung des Auszugsprofils mit der Rollobahn möglich, wenn die entsprechende Kante der Rollobahn eine dreidimensionale komplizierte Raumkurve beschreibt, d.h. sowohl in Richtung senkrecht zu der aufgespannten Rollobahn als auch in der Ebene der Rollobahn mit nicht konstantem Radius gekrümmt ist.

Eine besonders feste Verbindung zwischen den Auszugsprofilteilen wird erreicht, wenn beide jeweils Fügeflächen aufweisen, die im montierten Zustand aufeinanderliegen und deren Erstreckung von der Nut weg größer ist als die Dicke wenigstens eines der Auszugsprofilteile. Mit anderen Worten, das Auszugsprofil ist der Dicke nach in die beiden Auszugsprofilteile aufgeteilt und nicht in Querrichtung. Die Fügeverbindung zwischen den beiden Auszugsprofilteilen wird auf diese Weise besonders stabil.

Dabei ist zweckmäßigerweise das ungeteilte Auszugsprofilteil mit der glatten Seite das überwiegend sichtbare Auszugsprofilteil, während das andere an dessen Unterseite angeordnet ist, wenn das Rollo von unten nach oben läuft.

Die Aufteilung zwischen den beiden Auszugsprofilteilen kann so geschehen, dass das eine Auszugsprofilteil in eine Nut des anderen Auszugsprofilteils eingelegt wird, wobei dieser Einlegenut frei von Hinterschneidungen ist. Die andere Ausführungsform verwendet ein Auszugsprofilteil, das von der Verankerungsnut für die Rollobahn bis zu der seitlichen Kante des anderen Auszugsprofilteils erreicht. Im letzteren Fall ist beim Fügen ein Werkzeug zum Stabilisieren erforderlich, während im anderen Falle in der Regel kein Werkzeug benötigt wird.

Nach dem Fügen der Teile werden diese vorzugsweise stoffschlüssig verbunden. Die stoffschlüssige Verbindung kann durch Kleben, Ultraschallschweißen oder Laserschweißen erfolgen.

Die Nutenkammer hat zweckmäßigerweise Kreisquerschnitt.

Um das Herstellungswerkzeug noch weiter zu vereinfachen, ist es von Vorteil, wenn wenigstens bei einem Auszugsprofilteil die betreffende Schlitzwand ohne Sprung oder Knick in den betreffenden Abschnitt der Wand der Nutenkammer übergeht.

Die Rollobahn kann einen im Wesentlichen viereckigen oder dreieckigen Zuschnitt aufweisen.

Ferner kann die Rollobahn biegeschlaff oder mehr oder weniger steif sein.

Verspannungen werden vermieden, wenn der Verlauf des Auszugsprofils bereits vor der Montage der Rollobahn an dem Auszugsprofil an den Verlauf der daran verankerten Kante der Rollobahn angepasst ist.

Die wulstartige Verdickung kann durch einen angenähten Keder, einen genähten Schlauch mit Füllstück oder ähnlichen gebildet sein.

Die wulstartige Verdickung braucht nicht symmetrisch zu der Rollobahn zu liegen. Es genügt, wenn die wulstartige Verdickung lediglich auf einer Seite der Rollobahn aufgebracht ist.

Die Antriebseinrichtung des Fensterrollos kann eine Wickelwelle umfassen, wenn das Rollo biegeschlaff ist und in einem relativ kleinem Raum verstaut werden soll.

Um das Rollo aus- oder einzufahren, kommt eine Elektromotor infrage, der zweckmäßigerweise mit einer Feder zusammenwirkt, um die Rollobahn in der entgegengesetzten Richtung zwangsläufig zu bewegen, soweit es die jeweilige Einstellung des Elektromotors freigibt. Eine besonders platzsparende Variante besteht in der Verwendung eines Federmotors zum Antrieb der Wickelwelle.

Im Falle der Verwendung einer biegeschlaffen Rollobahn sind zweckmäßigerweise noch Führungseinrichtungen vorhanden. Diese können in den üblichen Führungsschienen oder in Schubstangen bestehen, die hinreichend biege- oder knicksteif sind, um die Rollobahn aufgespannt zu halten.

Im Übrigen sind Weiterbildungen der Erfindung Gegenstand von Unteransprüchen.

Beim Lesen der Figurenbeschreibung wird auch klar, dass eine Reihe von Abwandlungen möglich sind.

In der Zeichnung sind Ausführungsbeispiele des Gegenstandes der Erfindung dargestellt, es zeigen:
- Fig. 1: den Frontbereich einer Limousine mit Blick auf die Innenseite der hinteren rechten Tür, in einer aufgebrochenen perspektivischen Darstellung,
- Fig. 2: die hintere rechte Seitentür nach Fig. 1, in einer perspektivischen, schematischen Darstellung und teilweise aufgebrochen,
- Fig. 3: die Vorderkante der Rollobahn des Seitenfensterrollos nach Fig. 2 in einer Ansicht von vorne,
- Fig. 4: einen Schnitt durch das Auszugsprofil des Fensterrollos nach Fig. 2, in einer stark vergrößerten Darstellung, und
- Fig. 5: ein weiteres Ausführungsbeispiel des Auszugsprofils in einer Darstellung ähnlich Fig. 4.

In der nachfolgenden Figurenbeschreibung werden Begriffe wie "vorne", "hinten", "oben" oder "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicher Weise gebraucht werden. Lediglich bei der Bezugnahme auf die Rollobahn werden die Begriffe Vorderkante oder Hinterkante auf die Rollobahn selbst bezogen unabhängig von der Einbaulage in dem Fahrzeug.

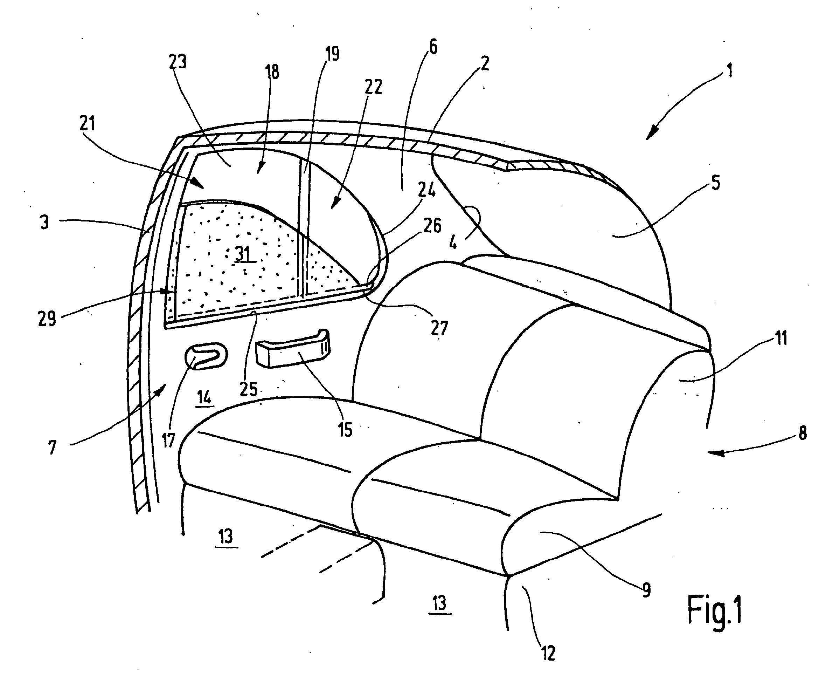

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Die dem Innenraum zugekehrte Innenseite der Seitentür 7 ist mit einer Innenverkleidung 14 versehen, an der ein Türgriff 15 befestigt ist und in dem eine Betätigungsklinke 17 eingelassen ist, um das Schloss der Seitentür 7 zu öffnen.

Die Seitentür 7 enthält oberhalb der Innenverkleidung 14 eine Fensteröffnung 18, die durch einen Zwischensteg 19 in zwei Abschnitte 21 und 22 aufgeteilt ist. Der Abschnitt 22 hat eine etwa dreieckförmige Gestalt, während der Abschnitt 21 im weitesten Sinne rechteckig ist. In ihm befindet sich eine in bekannter Weise versenkbare Seitenfensterscheibe 23. Die beiden Abschnitte 21, 22 sind durch den als Fensterscheibenführung dienenden Steg 19 voneinander getrennt.

Beide Abschnitte 21, 22 werden außen von einer durchgehenden gemeinsamen Fensterlaibung 24 umgeben. Die Fensterlaibung bildet unten einen im Wesentlichen geraden Abschnitt 25, der etwas breiter ist als der Rest der Fensterlaibung 24. In dem Fensterlaibunbsabschnitt 25 befindet sich ein Schlitz 26, der sich über die gesamte Länge des Fenstelaibungsabschnitts 25 erstreckt. Er wird zum Wageninneren von einem Schlitzrand 27 begrenzt. Seine äußere Begrenzung ist die Fensterscheibe 23 sowie die Scheibe in dem Fensterabschnitt 22.

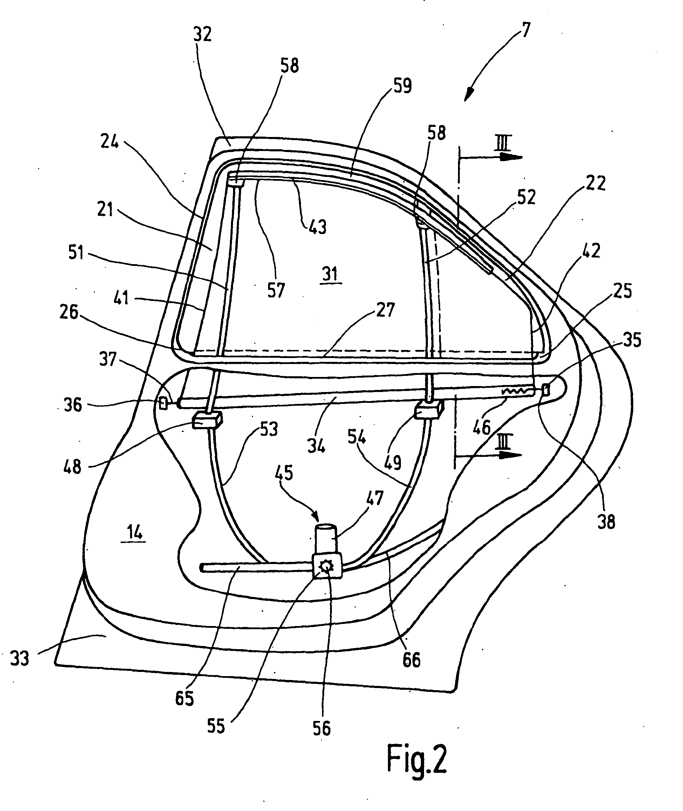

Die Seitentür 7 ist mit einem, in der Figur 2 im Einzelnen dargestellten, Seitenfensterrollo 29 versehen, dessen Rollobahn 31 in den Darstellung der Figur 1 teilweise und der Darstellung von Figur 2 vollständig ausgefahren ist, um so den Fondbereich der Fahrgastzelle gegen seitliche Sonneneinstrahlung zu schützen. Die Rollobahn 31 läuft durch den neben oder unterhalb der Fensterrahmenabschnitte 21, 22 vorhandenen Schlitz 26.

In Fig. 2 ist die Seitentür 7 gesondert veranschaulicht. Es sind in Fig. 2 ein umlaufender Türfalz 32, Abschnitte der aus Blech bestehenden Türaußenhaut 33 sowie die aufgebrochen gezeigte Innenverkleidung 14 zu erkennen, die sich auf der Innenschale der Tür 7 befindet.

Zu dem Seitenfensterrollo 29 gehört eine Wickelwelle 34, die unterhalb des Fensterlaibungsabschnitts 25 hinter der Innenverkleidung 14 auf der Tür 7 gelagert ist. Dazu trägt die Tür 7 im Abstand von einander zwei Lagerböcke 35 und 36 die Lagerzapfen 37 und 38 aufnehmen, die axial aus der rohrförmigen Wickelwelle 34 hervorstehen.

Die Rollobahn 31 besteht aus einem Zuschnitt aus einer biegeschlaffe Kunststofffolie, die ausreichend das Sonnenlicht abschirmt. Die Außenkontur entspricht der Außenkontur der Fensteröffnung 18, d.h. der Summe der beiden Fensteröffnungen 21 und 22.

Die Rollobahn 31 wird von einer in Fahrtrichtung liegenden seitlichen geraden Kante 41, einer dazu parallelen hinteren geraden Kante 42 sowie einer gekrümmt verlaufenden Oberkante 43 und einer an der Wickelwelle 34 befestigten, nicht erkennbaren Kante, begrenzt. Der zuschnitt ist damit angenähert trapezförmig.

Um die Rollobahn 31 ein- oder auszufahren, ist eine Antriebseinrichtung 45 vorgesehen. Zu ihr gehört ein schematisch gezeigter Federmotor 46, der sich in der Wickelwelle 34 befindet. Der Federmotor 46 ist einends mit der Wickelwelle 34 fest verbunden ist. Sein anderes Ende ist drehfest an den Lagerzapfen 38 angekoppelt. Der Lagerzapfen 38 wiederum sitzt drehfest in dem Lagerbock 35. Der Federmotor 46 erzeugt eine Vorspannkraft im Sinnes eines Aufwickeln der Rollobahn 31 auf die Wickelwelle 46. Hierzu ist die Rollobahn 31 an der Wickelwelle 34 beispielsweise mittels eines Keders in bekannter Weise befestigt.

Ein weiterer Bestandteil der Antriebseinrichtung 45 ist ein Getriebemotor 47, der wie nachstehend beschrieben mit der Oberkante 43 getrieblich gekoppelt ist.

Unterhalb der Wickelwelle 34 sind an der Tür 7 im Abstand zu einander zwei Gleitführungsblöcke 48 und 49 befestigt. Aus jedem der Gleitführungsblöcke 48, 49 tritt nach oben ein drucksteifes und verhältnismäßig biegesteifes zylindrisches Betätigungsglied 51, 52 aus. Das obere freie Ende der Betätigungsglieder 51, 52 ist mit der Oberkante 43 fest verbunden. Die nach oben durch den Schlitz 26 jeweils ausgeschobene Teile der Betätigungsglieder 51, 52 laufen parallel zueinander

Ausgehen von den Führungsblöcken 48, 49 führen schlauchförmige Hüllen 53, 54 zu dem Getriebemotor 47. Die hüllen dienen der drucksteifen Führung der in ihnen gleitenden Betätigungsglieder 51, 52.

Jedes Betätigungsglied 51, 52 wird von einem drucksteifen, linienförmigen Element, beispielsweise einem flexiblen Metall- oder Kunststoffdraht, der Seele eines Bowdenzugs oder einer schubsteifgeführten, verseilten Drahtlitze gebildet. Zumindest an dem motorseitigen Ende trägt jedes Betätigungsglied 51, 52 auf seiner Außenumfangsfläche eine eine Verzahnung bildende Drahtwicklung, die unverschiebbar mit dem Betätigungsglied 51, 52 verbunden ist. Betätigungsglieder dieser Art sind auch unter der Handelsbezeichnung "SU-flexwelle" verfügbar und werden unter anderem bei Fensterhebern eingesetzt.

Der Antriebsmotor 47 ist ein permanent erregter Gleichstrommotor, dem ein Untersetzungsgetriebe 55 nachgeordnet ist. Auf einer Ausgangswelle des Getriebes 55 sitzt drehfest ein Stirnzahnrad 56, dessen Teilung mit der Teilung der Schnecke oder Schraube auf den Betätigungsgliedern 51, 52 übereinstimmt. Die Betätigungsglieder 51, 52 laufen an einander gegenüberliegenden Seiten an dem Zahnrad 56 tangential vorbei, wobei ihre Außenverzahnung in mit dem Zahnrad 56 kämmt.

Auf diese Weise ist der Antriebsmotor 47 mit der Oberkante 43 der Rollobahn 31 getrieblich verbunden.

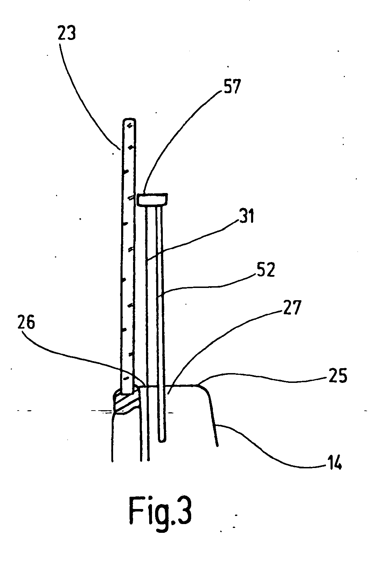

Wie die schematisierte Schnittdarstellung von Fig. 3 zeigt, ist die Oberkante 43 der Rollobahn 31 mit einem Auszugsprofil 57 versehen, das sich fast über die gesamte Länge der Oberkante zwischen der Seitenkante 41 und der Seitenkante 42 erstreckt.

Das Auszugsprofil 57 ist im Bereich der beiden Betätigungsglieder 51 und 52 mit Aufnahmetaschen 57 versehen, in denen die freien Enden der Betätigungsglieder 51, 52 stecken.

Die Funktionsweise des insoweit beschriebenen Seitenfensterrollos 29 ist wie folgt, wobei von der ausgefahrenen Stellung gemäß Fig. 2 ausgegangen wird:

Die beiden Betätigungsglieder 51 und 52 sind mit Hilfe des Antriebsmotors 47 ausgefahren und haben die Oberkante 43 mit dem Auszugsprofil 57 bis in die Nähe des oberen Abschnitts der Fensterleibung 24 bewegt. Es verbleibt nunmehr ein kleiner Spalt zwischen der Oberkante des Seitenfensterrollos 26 und dem oberen Abschnitt der Fensterlaibung 24. Die Fensteröffnung 18 ist nahezu vollständig mit der Rollobahn 31 überdeckt.

Die Rollobahn 31 wird mit Hilfe des Federmotors 46 gespannt gehalten, der bestrebt ist die Rollobahn 31 auf die Wickelwelle 34 aufzuwickeln. Hieran wird sie mit Hilfe der Betätigungsglieder 51, 52 gehindert, deren unteres Ende durch den Antriebsmotor 57 blockiert ist, so dass sie durch die Wirkung des Federmotors 46 nicht zurückgedrückt werden können.

Wenn der Benutzer das Seitenfensterrollo 29 einfahren will, setzt er mit der entsprechenden Drehrichtung den Antriebsmotor 47 in Gang, der daraufhin die Betätigungsglieder 51, 52 bezogen auf die Darstellung nach unten zieht und die dabei über das Getriebe 55 überstehenden Ende in Schutz- oder Speicherrohre 65, 66 zurückbewegt.

In dem Maße, in dem die Betätigungsglieder 51 und 52 durch den Schlitz 26 hindurch nach unten verschwinden, bewegt sich die Oberkante 43 der Rollobahn 31 ebenfalls nach unten.

Beim Ausfahrend des Seitenfensterrollos 29 erfolgt die umgekehrte Bewegung.

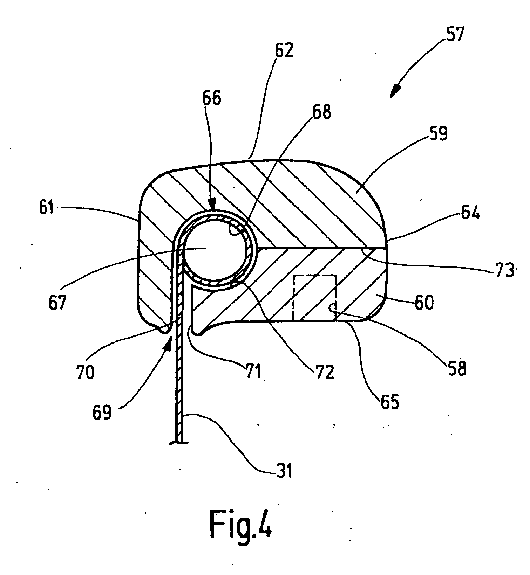

Figur 4 zeigt das Auszugsprofil 57 in einer vergrößerten Schnittdarstellung. Wie zu erkennen ist, ist das Auszugsprofil 57 sandwichartig aufgebaut und setzt sich aus einem oberen Auszugsprofilteil 59 und einem unteren Auszugsprofilteil 60 zusammen. Im Querschnitt gesehen, ist das Auszugsprofil 57 angenähert rechteckig und wird von einer dem Fenster zugekehrten schmalen Vorderseite 61, einer breiteren Oberseite 62, einer dem Fahrzeuginneren zugekehrten Schmalseite 64 und einer breiteren Unterseite 65 begrenzt.

Im Querschnitt gesehen begrenzen die beiden Auszugsprofilteile 59 und 60 zusammen eine hinterschnittene Nut 66, in der die Oberkante der Rollobahn 31 verankert ist. Die Oberkante der Rollobahn 31 ist hierzu mit einer im Querschnitt kreisförmigen Verdickung 67 versehen, bspw. in Gestalt eines angenähten Keders oder dergleichen.

Die hinterschnittene Nut 66 setzt sich auf eine Nutenkammer 68 und einem Nutenschlitz 69 zusammen. Der Nutenschlitz 69 wird von zwei einander gegenüberliegenden Schlitzwänden 70 und 71 begrenzt. An ihrem innen liegenden Ende gehen die beiden Schlitzwände 70 und 71 in einer Wand 72 über, die die Nutkammer 68 begrenzt.

Die Nutkammer 68 ist etwa kreisförmig im Querschnitt und insoweit an die Gestalt der Verdickung 67 angepasst. Die beiden Schlitzwände 70 und 71 verlaufen parallel zueinander, wobei die Schlitzwand 70, wie gezeigt, unmittelbar tangential in den kreisförmigen Querschnitt der Nutkammer 68 übergeht. Der Übergang ist somit knick- und sprungfrei.

Das obere Auszugsprofilteil 59 und das untere Auszugsprofilteil 60 stoßen mit zwei im Wesentlichen geraden Fügefläche 73 aneinander. Die Fügeflächen 73 reichen von der Nutkammer 68 bis zu der inne liegenden Schmalseite 64 des Auszugsprofils 57. Sie laufen im Übrigen über die gesamte Länge des Auszugsprofils 57 durch. Die Fügeflächen 73 erstrecken sich im Übrigen etwa in der Verlängerung eines Durchmessers der Nutenkammer 68, so dass ein Teil der Wand 72 in dem unteren Auszugsprofilteil 60 und ein anderer Teil der Wand in den oberen Auszugsprofilteil 59 ausgebildet ist. Die Fügeflächen liegen etwa in der Mitte zwischen der Oberseite 62 und der Unterseite 65. Dadurch ist jedes Auszugsprofilteil 59, 60 halb so dick wie das Auszugsprofilteil 57 und es kommt eine großflächige Fügestelle zu Stande.

Außerdem gehört die Schlitzwand 70 zu dem oberen Auszugsprofilteil 59, während die Schlitzwand 71 Bestandteil des unteren Auszugsprofilteils 60 ist. Zufolge dieser Aufteilung der beiden Auszugsprofilteile hat das obere Auszugsprofilteil 59, von der Seite gesehen, etwa eine L-förmig abgewinkelte Gestalt, wobei sich in der Innenecke ein Teil der Wand 68 sowie die Schlitzwand 70 befinden. Das untere Auszugsprofilteil 60 dagegen ist etwa rechteckig, wobei eine Außenecke konkav ist und im gefügten Zustand die Nutenkammer 68 begrenzt.

Aus der Darstellung von Figur 4 lässt sich ferner erkennen, dass jedes der beiden Auszugsprofilteile 59 und 60 für sich genommen, zumindest im Bereich der Nut 66 hinterschneidungsfrei ist, während die Nut 66 an sich eine hinterschnittige Nut ist. Dies ermöglicht sowohl das obere Auszugsprofilteil 59 als auch das untere Auszugsprofilteil 60 jeweils in Formnestern zu spritzen, die zum Erzeugen der Wand 72 der Nut 66 sowie der Schlitzwände 70 und 71 keine ziehbaren Kerne erfordern. Es ist die Herstellung eines Auszugsprofils möglich, das den komplizierten, gekrümmten Verlauf aufweist, wie er in den Figuren 1 und 2 zu erkennen ist, d.h. einen Verlauf, bei dem sich der Krümmungsradius längs der Oberkante 43 verändert und die Raumkurve dreidimensional ist.

In dem unteren Auszugsprofilteil 60 können die bereits erwähnten Aufnahmetaschen 58 ausgebildet sein.

Die Montage des Auszugsprofils 57 an der Oberkante 43 der Rollobahn 31 geschieht, indem zunächst die Verdickung lagerichtig in der Innenecke des oberen Auszugsprofilteils 59 eingelegt wird. Dies bereitet keine Schwierigkeiten, da die Kante 43 durch die kederartige Verdickung 67 entsprechend stabilisiert ist. Nach dem Positionieren der Oberkante 43 wird das untere Profilteil 60 mit seiner Fügefläche 73 an die Fügefläche 73 des oberen Auszugsprofilteils 59 zur Anlage gebracht. Die beiden Auszugsprofilteile 59 und 60 werden sodann in geeigneter Weise stoffschlüssig miteinander im Bereich der Fügeflächen 73 zumindest punktuell verbunden.

Zum Verbinden kann Laserschweißen, Ultraschallschweißen oder auch ein Kleber in Frage kommen. Gegebenenfalls können hierzu Vertiefungen ähnlich der Aufnahmetasche 58 vorgesehen sein, um ein Laserdurchschweißen von der Unterseite 65 her zu ermöglichen.

Abgesehen hiervon, wäre es auch möglich, die beiden Auszugsprofilteile 59 und 60 durch eine Rast- oder Klipsverbindung miteinander zu verbinden. Hierdurch würde sich das Formnest auch nicht wesentlich verkomplizieren, weil zum Erzeugen der räumlich nur sehr kleinen Hinterschneidungen für die Klipse ohne Weiteres ziehbare Kerne verwendet werden könnten.

Bei der Ausführungsform nach Fig. 4 liegen die beiden Auszugsprofilteile 59 und 60 im Wesentlichen sandwichartig aufeinander. Um ein Verrutschen vor der stoffschlüssigen Verbindung wirksam zu verhindern, können ineinander greifende Zapfen und Öffnungen im Bereich der beiden Fügeflächen 73 vorgesehen sein, die hinterschneidungsfrei ausgebildet ist.

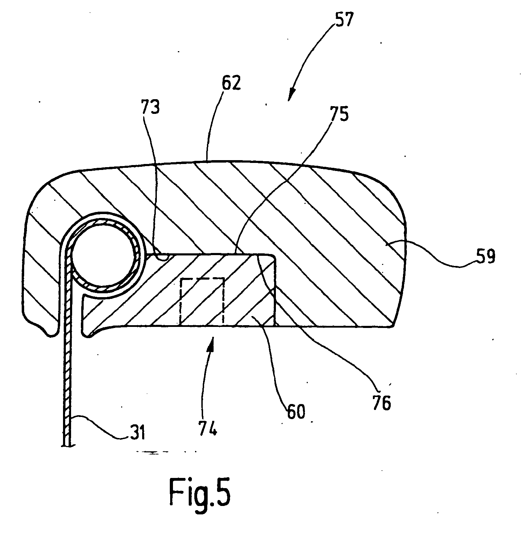

Figur 5 zeigt eine Ausführungsform, bei der das untere Auszugsprofilteil 60 sich nicht über die Breite des oberen Auszugsprofilteils 57 von der Kammer 66 bis zu der Hinteroder Innenseite 64 erstreckt. Vielmehr enthält das obere Auszugsprofilteil 59 angrenzend an die Nut 66 eine weitere in Längsrichtung des Auszugsprofils 57 durchlaufende nutförmige Ausnehmung 74, die einerseits von einer Fläche 75 und einer im Wesentlichen rechtwinklig dazu verlaufenden Fläche 76 begrenzt ist. In diese so gebildete nutförmige Ausnehmung 74 wird das untere Auszugsprofilteil 60 in der gezeigten Weise eingelegt, wobei die Fügefläche 73 auf der Fügefläche 75 der nutförmigen Ausnehmung 74 aufliegt, während die ursprüngliche Schmalseite 64 des unteren Auszugprofilteils 60 an der Fläche 76 anliegt.

Darüber hinaus besteht kein grundsätzlicher, prinzipieller Unterschied zwischen den beiden Ausführungsformen nach Figur 4 und Figur 5.

Das neu gestaltete Auszugsprofil wurde vorstehend in Verbindung mit einem Seitenfensterrollo erläutert, bei dem die Oberkante, an der das Auszugsprofil befestigt ist, stark gekrümmt ist. Es leuchtet ohne Weiteres ein, dass das zweiteilige Auszugsprofil auch vorteilhafterweise in Verbindung mit Rolloanordnungen verwendet werden kann, bei denen die Ober- oder Vorderkante der Rollobahn exakt gerade ist. Hierbei wäre zwar die Montage des Auszugsprofils der Rollobahn relativ unkompliziert, aber der zweiteilige Aufbau hätte hinsichtlich der Herstellung deutliche Vorteile.

Ein Fensterrollo ist an einer Kante der Rollobahn mit einem Auszugsprofil versehen. Das Auszugsprofil enthält zur Verbindung mit der Rollobahn eine hinterschnittene Nut. Um die Herstellung des Auszugsprofils und der Montage an der Rollobahn zu vereinfachen, ist das Auszugsprofil zweiteilig gebildet, wobei an jedem Teil ein Teil der Befestigungsnut ausgebildet ist. Jedes Teil für sich ist im Bereich der Nut frei von Hinterschneidungen.

## Patentansprüche

1. Fensterrollo (29) für Kraftfahrzeuge,
mit einer Rollobahn (31), die zwei voneinander abliegende Kanten aufweist, von denen die eine mit einer wulstförmigen Verdickung (67) versehen ist, die zumindest über einen Teil der Länge der Kante im Wesentliche durchläuft,
mit einer Antriebseinrichtung (45), die mit der Rollobahn (31) verbunden und dazu eingerichtet ist die Rollobahn (31) zu bewegen, und
mit einem an einer Kante (22) angeordneten Auszugsprofil (57), das eine Nut (66) enthält,
- die im Querschnitt an die Verdickung (67) angepasst ist,
- in der die der Verdickung (67) der Rollobahn (31) verankert ist,
- die zumindest über einen Teil der Länge des Auszugsprofils (57) durchläuft und
- die sich aus einem von zwei Schlitzwänden (70,71) begrenzten Nutenschlitz (69) und einer von einer Wand (72) begrenzten Nutenkammer (68) zusammensetzt, deren Weite größer als der Nutenschlitz (69) ist,
**dadurch gekennzeichnet, dass** das Auszugsprofil (57) bezogen auf seinen Querschnitt zumindest in Bereich der Nut (66) aus zwei Auszugsprofilteilen (59,60) besteht, von denen jeder eine Schlitzwand (70,71) und einen Abschnitt der Wand (72) der Nutenkammer (68) aufweist, derart, dass jedes Auszugsprofilteil (57) für sich zumindest im Bereich der Nut (66) im Wesentlichen frei von ausgeprägten Hinterschneidungen ist.

2. Fensterrollo nach Anspruch 1, **dadurch gekennzeichnet, dass** die Auszugsprofilteile (59,60) Fügeflächen (73,75) aufweisen, die im montierten Zustand aufeinander liegen und deren Erstreckung von der Nut (66) weg größer ist als die Dicke wenigstens eines der Auszugsprofilteile (59,60).

3. Fensterrollo nach Anspruch 1, **dadurch gekennzeichnet, dass** die Breite eines der Auszugsprofilteile (59,60) von der Nut (66) bis zu einer entsprechenden Randkante (64) des anderen Auszugsprofilteils (59) reicht.

4. Fensterrollo nach Anspruch 1, **dadurch gekennzeichnet, dass** eines der Auszugsprofilteile (59,60) in einer Aufnahmenut (74) des anderen Auszugsprofilteils (60) liegt.

5. Fensterrollo nach Anspruch 1, **dadurch gekennzeichnet, dass** die Auszugsprofilteile (59,60) zumindest punktweise stoffschlüssig miteinander verbunden sind.

6. Fensterrollo nach Anspruch 4, **dadurch gekennzeichnet, dass** die Aufnahmenut (74) frei von Hinterschneidungen ist.

7. Fensterrollo nach Anspruch 1, **dadurch gekennzeichnet, dass** die Nutkammer (68) einen zumindest angenähert kreisförmigen Querschnitt aufweist.

8. Fensterrollo nach Anspruch 1, **dadurch gekennzeichnet, dass** bei einem Auszugsprofilteil (59) die betreffende Schlitzwand (70) ohne Sprung in den angrenzenden Abschnitt der Wand (72) der Nutkammer (68) übergeht.

9. Fensterrollo nach Anspruch 1, **dadurch gekennzeichnet, dass** die Auszugsprofilteile (59,60) miteinander Laser oder Ultraschall geschweißt oder verklebt sind.

10. Fensterrollo nach Anspruch 1, **dadurch gekennzeichnet, dass** die Rollobahn (31) einen im Wesentlichen viereckigen oder dreieckigen Zuschnitt aufweist.

11. Fensterrollo nach Anspruch 1, **dadurch gekennzeichnet, dass** die Rollobahn (31) biegeschlaff ist.

12. Fensterrollo nach Anspruch 1, **dadurch gekennzeichnet, dass** die Kante (22) mit der Verdickung (67) einen nicht geraden Verlauf aufweist.

13. Fensterrollo nach Anspruch 1, **dadurch gekennzeichnet, dass** der Verlauf des Auszugsprofils (57) bereits vor der Montage an der Rollobahn (31) an dem Auszugsprofil (57) an den Verlauf der daran verankerten Kante (22) der Rollobahn (31) angepasst ist.

14. Fensterrollo nach Anspruch 1, **dadurch gekennzeichnet, dass** die Kante (22) in der Fläche der aufgespannten Rollobahn (31) konvex verläuft, wobei sich vorzugsweise der Krümmungsradius längs der Kante (22) verändert.

15. Fensterrollo nach Anspruch 1, **dadurch gekennzeichnet, dass** die wulstförmige Verdickung (67) einen Keder bildet.

16. Fensterrollo nach Anspruch 1, **dadurch gekennzeichnet, dass** die wulstförmige Verdickung (67) sich lediglich auf einer Seite der Rollobahn (31) befindet.

17. Fensterrollo nach Anspruch 1, **dadurch gekennzeichnet, dass** die Antriebseinrichtung (45) eine Wickelwelle (34) umfasst.

18. Fensterrollo nach Anspruch 1, **dadurch gekennzeichnet, dass** die Antriebseinrichtung (45) einen Elektromotor (47) umfasst.

19. Fensterrollo nach Anspruch 1, **dadurch gekennzeichnet, dass** die Antriebseinrichtung (45) wenigstens eine Feder oder einen Federmotor (46) umfasst.

20. Fensterrollo nach Anspruch 1, **dadurch gekennzeichnet, dass** es eine Führungseinrichtung (51,52) umfasst, mittels derer das Auszugprofil (57) bei seiner Bewegung zwischen einer eingezogenen Stellung und einer aufgespannten Stellung geführt wird.

## Claims

1. Window roller blind (29) for motor vehicles,
with a blind sheet (31), which has two edges lying remote from one another, one of which is provided with a bead-like thickened portion (67), which runs substantially continuously at least over part of the length of the edge,
with a drive means (45), which is connected to the blind sheet (31) and is arranged to move the blind sheet (31), and
with a pull-out profile (57), which is arranged on an edge (22) and contains a groove (66),
• which is matched in cross-section to the thickened portion (67),
• in which the thickened portion (67) of the blind sheet (31) is anchored,
• which runs continuously at least over part of the length of the pull-out profile (57), and
• which is formed from a groove slot (69) delimited by two slot walls (70, 71) and a groove chamber (68), which is delimited by a wall (72) and the width of which is larger than the groove slot (69),
**characterised in that**
in relation to its cross-section at least in the region of the groove (66) the pull-out profile (57) consists of two pull-out profile parts (59, 60), each of which has a slot wall (70, 71) and a section of the wall (72) of the groove chamber (68) in such a way that each pull-out profile part (57) is itself substantially free from pronounced undercuts at least in the region of the groove (66).

2. Window roller blind according to claim 1, **characterised in that** the pull-out profile parts (59, 60) have joint faces (73, 75), which lie on one another in the mounted state and the extent of which away from the groove (66) is greater than the thickness of at least one of the pull-out profile parts (59, 60).

3. Window roller blind according to claim 1, **characterised in that** the width of one of the pull-out profile parts (59, 60) extends from the groove (66) as far as a corresponding boundary edge (64) of the other pull-out profile part (59).

4. Window roller blind according to claim 1, **characterised in that** one of the pull-out profile parts (59, 60) lies in a receiving groove (74) of the other pull-out profile part (60).

5. Window roller blind according to claim 1, **characterised in that** the pull-out profile parts (59, 60) are integrally connected to one another at least at points.

6. Window roller blind according to claim 4, **characterised in that** the receiving groove (74) is free from undercuts.

7. Window roller blind according to claim 1, **characterised in that** the groove chamber (68) has an at least approximately circular cross-section.

8. Window roller blind according to claim 1, **characterised in that** in one pull-out profile part (59) the respective slot wall (70) merges into the adjoining section of the wall (72) of the groove chamber (68) without any gap.

9. Window roller blind according to claim 1, **characterised in that** the pull-out profile parts (59, 60) are welded to one another by laser or ultrasound or are glued to one another.

10. Window roller blind according to claim 1, **characterised in that** the blind sheet (31) has a substantially square or triangular blank.

11. Window roller blind according to claim 1, **characterised in that** the blind sheet (31) is slack.

12. Window roller blind according to claim 1, **characterised in that** the edge (22) with the thickened portion (67) has a non-straight course.

13. Window roller blind according to claim 1, **characterised in that** the course of the pull-out profile (57) is already matched to the course of the edge (22) of the blind sheet (31) anchored thereon before the blind sheet (31) is mounted on the pull-out profile (57).

14. Window roller blind according to claim 1, **characterised in that** the edge (22) runs convexly in the surface of the opened-out blind sheet (31), wherein the radius of curvature preferably varies along the edge (22).

15. Window roller blind according to claim 1, **characterised in that** the bead-like thickened portion (67) forms a weatherstrip.

16. Window roller blind according to claim 1, **characterised in that** the bead-like thickened portion (67) is only located on one side of the blind sheet (31).

17. Window roller blind according to claim 1, **characterised in that** the drive means (45) comprises a winding shaft (34).

18. Window roller blind according to claim 1, **characterised in that** the drive means (45) comprises an electric motor (47).

19. Window roller blind according to claim 1, **characterised in that** the drive means (45) comprises at least one spring or a spring motor (46).

20. Window roller blind according to claim 1, **characterised in that** it comprises a guide means (51, 52), by means of which the pull-out profile (57) is guided during its movement between a retracted position and an opened-out position.

## Revendications

1. Store de fenêtre à enrouleur (29) pour véhicules automobiles,
comprenant une bande de store (31) qui présente deux bords éloignés l'un de l'autre, dont un est pourvu d'une surépaisseur (67) en forme de bourrelet qui s'étend sensiblement en continu au moins sur une partie de la longueur du bord,
comprenant un dispositif d'entraînement (45) qui est relié à la bande de store (31) et est agencé pour imprimer un mouvement à la bande de store (31), et
comprenant un profilé de traction (57) qui est disposé sur un bord (22) et comporte une rainure (66)
- dont la section est adaptée à la surépaisseur (67),
- dans laquelle est ancrée la surépaisseur (67) de la bande de store (31),
- qui s'étend au moins sur une partie de la longueur du profilé de traction (57), et
- qui est constituée d'une fente de rainure (69), délimitée par deux parois de fente (70, 71), et d'une cavité de rainure (68) qui est délimitée par une paroi (72) et dont la largeur est supérieure à celle de la fente de rainure (69),
**caractérisé par le fait que**
le profilé de traction (57), en ce qui concerne sa section, est constitué, au moins dans la région de la rainure (66), de deux éléments de profilé de traction (59, 60) qui présentent chacun une paroi de fente (70, 71) et une partie de la paroi (72) de la cavité de rainure (68), de manière à ce que, pris séparément, chaque élément de profilé de traction (57) soit sensiblement exempt de contredépouilles marquées, au moins dans la région de la rainure (66).

2. Store de fenêtre à enrouleur selon la revendication 1, **caractérisé par le fait que** les éléments de profilé de traction (59, 60) présentent des surfaces d'assemblage (73, 75) qui, à l'état monté, sont appliquées l'une contre l'autre et dont la longueur à partir de la rainure (66) est supérieure à l'épaisseur d'au moins un des éléments de profilé de traction (59, 60).

3. Store de fenêtre à enrouleur selon la revendication 1, **caractérisé par le fait que** la largeur de l'un des éléments de profilé de traction (59, 60) s'étend de la rainure (66) jusqu'à un bord (64) correspondant de l'autre élément de profilé de traction (59).

4. Store de fenêtre à enrouleur selon la revendication 1, **caractérisé par le fait que** l'un des éléments de profilé de traction (59, 60) est inséré dans une rainure réceptrice (74) de l'autre élément de profilé de traction (60).

5. Store de fenêtre à enrouleur selon la revendication 1, **caractérisé par le fait que** les éléments de profilé de traction (59, 60) sont reliés entre eux par matière, au moins ponctuellement.

6. Store de fenêtre à enrouleur selon la revendication 4, **caractérisé par le fait que** la rainure réceptrice (74) est exempte de contredépouilles.

7. Store de fenêtre à enrouleur selon la revendication 1, **caractérisé par le fait que** la cavité de rainure (68) présente une section au moins approximativement circulaire.

8. Store de fenêtre à enrouleur selon la revendication 1, **caractérisé par le fait que** sur un élément de profilé de traction (59), la paroi de fente (70) concernée se raccorde sans gradin à la partie contiguë de la paroi (72) de la cavité de rainure (68).

9. Store de fenêtre à enrouleur selon la revendication 1, **caractérisé par le fait que** les éléments de profilé de traction (59, 60) sont soudés ou collés l'un à l'autre par laser ou ultrasons.

10. Store de fenêtre à enrouleur selon la revendication 1, **caractérisé par le fait que** la bande de store (31) est découpée sous une forme sensiblement quadrangulaire ou triangulaire.

11. Store de fenêtre à enrouleur selon la revendication 1, **caractérisé par le fait que** la bande de store (31) est souple en flexion.

12. Store de fenêtre à enrouleur selon la revendication 1, **caractérisé par le fait que** le bord (22) avec la surépaisseur (67) présente un tracé non rectiligne.

13. Store de fenêtre à enrouleur selon la revendication 1, **caractérisé par le fait qu'**avant le montage de la bande de store (31) sur le profilé de traction (57), la forme du profilé de traction (57) est déjà adaptée à la forme du bord (22) de la bande de store (31) qui y est fixé.

14. Store de fenêtre à enrouleur selon la revendication 1, **caractérisé par le fait que** le bord (22) a une forme convexe dans le plan de la bande de store (31) tendue, le rayon de courbure variant de préférence le long du bord (22).

15. Store de fenêtre à enrouleur selon la revendication 1, **caractérisé par le fait que** la surépaisseur (67) en forme de bourrelet constitue un élément de renfort.

16. Store de fenêtre à enrouleur selon la revendication 1, **caractérisé par le fait que** la surépaisseur (67) en forme de bourrelet se trouve seulement sur un côté de la bande de store (31).

17. Store de fenêtre à enrouleur selon la revendication 1, **caractérisé par le fait que** le dispositif d'entraînement (45) comprend un arbre d'enroulement (34).

18. Store de fenêtre à enrouleur selon la revendication 1, **caractérisé par le fait que** le dispositif d'entraînement (45) comprend un moteur électrique (47).

19. Store de fenêtre à enrouleur selon la revendication 1, **caractérisé par le fait que** le dispositif d'entraînement (45) comprend au moins un ressort ou un moteur à ressort (46).

20. Store de fenêtre à enrouleur selon la revendication 1, **caractérisé par le fait qu'**il comprend un dispositif de guidage (51, 52) au moyen duquel le profilé de traction (57) est guidé lors de son déplacement entre une position rentrée et une position étendue.
